# EUROPEAN PATENT APPLICATION

(11) **EP 4 813 471 A1**
(43) Date of publication of application: **30.09.2026**
(21) Application number: 24894268.2
(22) Date of filing: 17.04.2024
(51) Int. Cl.: A62C 3/16, A62C 5/00, A62C 35/00, C09J 167/02, H01M 50/24, H01M 50/213, H01M 50/271

(54) **BATTERY PACK FIRE EXTINGUISHER**

(30) Priority: 24.11.2023 KR 20230166063
(71) Applicant: SAMSUNG SDI CO., LTD., Yongin-si, Gyeonggi-do 17084 (KR)
(72) Inventor: LEE, Tae Jin, Yongin-si, Gyeonggi-do 17084 (KR)
(74) Representative: Marks & Clerk LLP
(86) International application number: PCT/KR2024/005185
(87) International publication number: WO 2025/110370

(57) **Abstract**

A battery pack fire extinguisher is provided. The battery pack fire extinguisher includes a plurality of battery cells, a bottom case incorporating the battery cells, a top case coupled to the bottom case, having a mounting groove, and having a flame induction part at an outer side of the mounting groove, and a fire extinguishing patch attached to the mounting groove and incorporating a fire extinguishing agent.

## Description

### [Technical Field]

The present disclosure relates to a battery pack fire extinguisher, and more particularly, to a battery pack fire extinguisher using a fire extinguishing agent.

### [Background Art]

Currently, when ignition occurs due to an accident or battery failure in an electric vehicle on sale and in operation, a barrier is installed around the ignited vehicle and filled with water to cool the battery and extinguish the fire. Thus, early fire extinguishing response is difficult before fire trucks arrive, and extinguishing battery fires requires a lot of time and a largh amount of water. In addition, because fire extinguishing water is sprayed from the outside of the electric vehicle, fire extinguishing efficiency is very low. Electric vehicles or energy storage systems include battery packs. When a fire occurs in one battery cell of the battery pack during operation, the flame is, ideally, removed to prevent ignition from spreading to other, surrounding battery cells.

### [Disclosure]

### [Technical Problem]

Embodiments of the present disclosure provide a battery pack fire extinguisher that prevents fire by blocking flames from spreading to surrounding battery cells when a fire occurs in one battery cell. Embodiments of the present disclosure provide a battery pack fire extinguisher that effectively induces ignition of a fire extinguishing agent by directing flame to the fire extinguishing agent with a built-in fire extinguishing function.

### [Technical Solution]

A battery pack fire extinguisher according to embodiments of the present disclosure includes a plurality of battery cells, a bottom case incorporating the battery cells, a top case coupled to the bottom case, having a mounting groove, and having a flame induction part at an outer side of the mounting groove, and a fire extinguishing patch attached to the mounting groove and incorporating a fire extinguishing agent. The battery cells may be formed into cylindrical rechargeable batteries. The fire extinguishing patch may be attached to the mounting groove with a double-sided tape. The double-sided tape may be formed of PET film to quickly reach a temperature that ignites the fire extinguishing agent. The mounting groove may be formed to correspond to the plurality of battery cells so that the fire extinguishing patch is responsible for fires in the plurality of battery cells. The side surface of the fire extinguishing patch and the corresponding inner side surface of the mounting groove may form a gap G therebetween. The fire extinguishing patch may have a thickness (t) smaller than a depth D of the mounting groove and may have a height difference (h) from the inner surface of the top case while attached to the mounting groove. The mounting groove may be formed by forming a ceiling into a plane and connecting the inner surface at a right angle to the ceiling. The flame induction part may be formed on the inner side surface of the mounting groove, which is connected at a right angle to the inner surface of the top case, and may induce the flame to the side surface of the fire extinguishing patch through the gap G between the side surface of the fire extinguishing patch and the corresponding inner side surface of the mounting groove. The side surface of the fire extinguishing patch and the corresponding inner side surface of the mounting groove may form a gap G2, and the gap G2 may be maximally formed on the side of the battery cell and may be minimally formed toward the ceiling of the mounting groove. The fire extinguishing patch may have the thickness (t) smaller than a depth D2 of the mounting groove and may have a height difference h2 from the inner surface of the top case while attached to the mounting groove. The mounting groove may be formed by forming a ceiling into a plane and connecting the inner side surface at an inclination angle θ to the ceiling. The flame induction part may be formed on the inner side surface of the mounting groove, which is connected at the inclination angle θ to the inner surface of the top case, and may induce flame to the side surface of the fire extinguishing patch through the gap G2 between the side surface of the fire extinguishing patch and the corresponding inner side surface of the mounting groove. A first side surface of the fire extinguishing patch and a corresponding first inner side surface of the mounting groove may form a first gap G31 and a second gap G32 therebetween by a stepped structure of the first inner surface, the first gap G31 may be maximally formed on the side of the battery cell, the second gap G32 may be minimally formed on the side of the ceiling of the mounting groove, and a second side surface of the fire extinguishing patch and a corresponding second inner side surface of the mounting groove may form the gap G therebetween. The fire extinguishing patch may have the thickness (t) smaller than a depth D3 of the mounting groove, and may have a height difference h3 from the inner surface of the top case while being attached to the mounting groove, and the flame induction part may be formed on the first inner surface of the mounting groove, which is connected via a stepped structure of the first inner surface on the inner surface of the top case, and may induce flame to the first side surface of the fire extinguishing patch through the first gap G31 and the second gap G32 between the first side surface of the fire extinguishing patch and the corresponding first inner side surface of the mounting groove. The side surface of the fire extinguishing patch and the corresponding inner side surface of the mounting groove may form a first gap G51, a second gap G52, and a third gap G53 by two ends of a round structure on the inner side surface therebetween. The first gap G51 may be maximally formed on the side of the battery cell, the second gap G52 may be minimally formed on the side of the ceiling of the mounting groove, and the third gap G53 may gradually widen toward the middle between the side of the battery cell and the mounting groove. The fire extinguishing patch may have the thickness (t) smaller than a depth D5 of the mounting groove and have a height difference h5 from the inner surface of the top case while attached to the mounting groove, the flame induction part may be formed on the inner side surface of the mounting groove, which is connected via a round structure to the inner surface of the top case, and may induce flame to the side surface of the fire extinguishing patch through the first gap G51, the second gap G52, and the third gap G53 between the side surface of the fire extinguishing patch and the corresponding inner side surface of the mounting groove. The fire extinguishing patch may be disposed in the mounting groove, and the fire extinguishing patch and the inner surface of the top case may be attached with a patch tape. The fire extinguishing patch may have the same thickness (t) as a depth D6 of the mounting groove, and the patch tape may be attached to the fire extinguishing patch and the inner surface of the top case in a plane state. A distance D20 between the fire extinguishing patch and the battery cell may be set to 3 to 6 times the thickness (t) of the fire extinguishing patch (D20=3~6*t).

### [Advantageous Effects]

According to embodiments, since a fire extinguishing patch incorporating a fire extinguishing agent is attached to a mounting groove of a top case, when a fire occurs in one of a plurality of battery cells, it is possible to prevent the fire from spreading to surrounding battery cells, thereby preventing a fire. According to embodiments, a flame induction part provided in a top case directly induces the flame to a fire extinguishing agent incorporating a fire extinguishing function, thereby effectively inducing ignition of the fire extinguishing agent. Therefore, the fire extinguishing agent may be quickly ignited and burned, quickly preventing the flame generated in the battery cell from spreading to surrounding battery cells.

### [Description of the Drawings]

FIG. 1 is a top plan view of a battery pack fire extinguisher according to a first embodiment of the present disclosure.
FIG. 2 is a cross-sectional view taken along line II-II of FIG. 1.
FIG. 3 is an enlarged cross-sectional view showing the relationship between a mounting groove and a fire extinguishing patch in FIG. 2.
FIG. 4 is a cross-sectional view showing the relationship between the mounting groove and the fire extinguishing patch in the battery pack fire extinguisher according to a second embodiment of the present disclosure.
FIG. 5 is a cross-sectional view showing the relationship between the mounting groove and the fire extinguishing patch in the battery pack fire extinguisher according to a third embodiment of the present disclosure.
FIG. 6 is a cross-sectional view showing the relationship between the mounting groove and the fire extinguishing patch in the battery pack fire extinguisher according to a fourth embodiment of the present disclosure.
FIG. 7 is a cross-sectional view showing the relationship between the mounting groove and the fire extinguishing patch in the battery pack fire extinguisher according to a fifth embodiment of the present disclosure.
FIG. 8 is a cross-sectional view showing the relationship between the mounting groove and the fire extinguishing patch in the battery pack fire extinguisher according to a sixth embodiment of the present disclosure.

### [Mode for Invention]

The present disclosure will be described more fully hereinafter with reference to the accompanying drawings, in which embodiments of the disclosure are shown. As those skilled in the art would realize, the described embodiments may be modified in various different ways, all without departing from the spirit or scope of the present invention. The drawings and description are to be regarded as illustrative in nature and not restrictive, and like reference numerals designate like elements throughout the specification.

When a fire occurs in one battery cell of a battery pack equipped with a plurality of battery cells, a fire extinguishing patch incorporating a fire extinguishing agent is used to remove the flame and prevent ignition from spreading to other battery cells in the battery pack. The fire extinguishing patch removes flames caused by a fire in the battery pack. The fire extinguishing patch is built into the battery pack to eliminate the flame in a shortest possible time and to prevent a spread of fire.

Pouch, prismatic, or circular battery cells may be used in the battery pack. The following embodiments illustrate a battery pack using circular battery cells as an example. To prevent chain ignition of battery cells, the battery pack includes the fire extinguishing patch encapsulating the fire extinguishing agent.

The fire extinguishing patch is installed at the top of the battery cell, which is the source of ignition in a structure in consideration of the operating characteristics of a fire extinguishing capsule. The fire extinguishing patch is configured to be burned by the flame of the
ignited battery cell to generate smoke, and to extinguish the flame of the battery cell by the smoke.

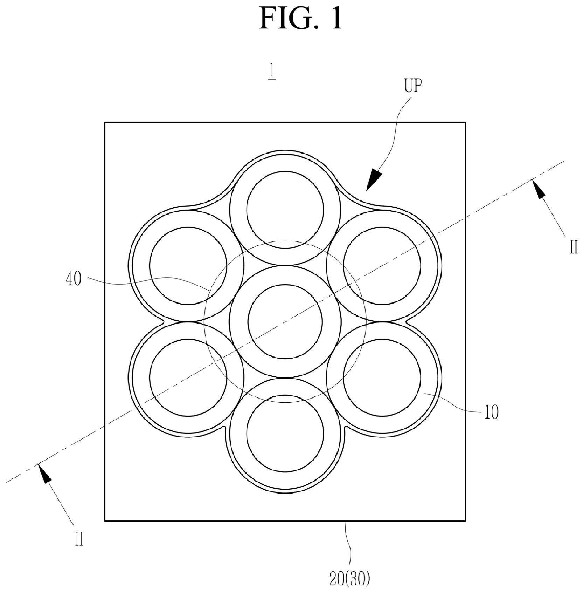

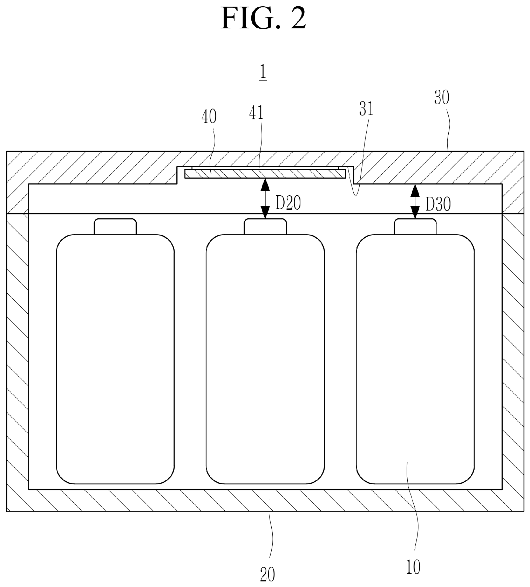

FIG. 1 is a top plan view of a battery pack fire extinguisher according to the first embodiment of the present disclosure, and FIG. 2 is a cross-sectional view taken along line II-II of FIG. 1. Referring to FIGS. 1 and 2, a battery pack fire extinguisher 1 according to the first embodiment includes a plurality of battery cells 10, a bottom case 20 incorporating the battery cells 10, a top case 30 coupled to the bottom case 20, having a mounting groove 31, and having a flame induction part 33 at an outer side of the mounting groove 31, and a fire extinguishing patch 40 attached to the mounting groove 31 and incorporating a fire extinguishing agent.

As an example, the battery cell 10 is illustrated as being a cylindrical rechargeable battery. The first embodiment shows a configuration in which one fire extinguishing patch 40 is provided above seven battery cells 10. When the seven battery cells 10 and one fire extinguishing patch 40 are configured as a unit pack UP, the first embodiment illustrates a configuration including one unit pack UP. However, the battery pack fire extinguisher 1 may be formed by repeatedly arranging unit packs UP in up-down and left-right directions of FIG. 1 according to a required capacity.

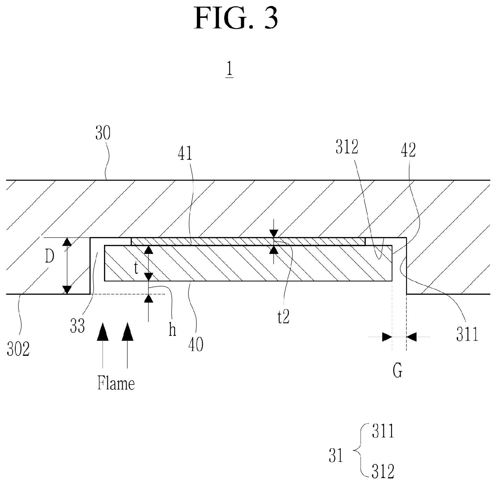

FIG. 3 is an enlarged cross-sectional view showing the relationship between a mounting groove and the fire extinguishing patch in FIG. 2. Referring to FIGS. 2 and 3, the fire extinguishing patch 40 is attached to the mounting groove 31 with a double-sided tape 41. As an embodiment, the double-sided tape 41 may be formed of PET film to quickly reach a temperature that ignites the fire extinguishing agent.

The temperature required to ignite the fire extinguishing agent is 380 to 400°C, and may also be 390°C. Since PET film has excellent thermal conductivity, it quickly transfers the temperature of the ignited flame to the fire extinguishing patch 40, quickly increasing the temperature of the fire extinguishing agent to the ignition temperature. That is, the fire extinguishing patch 40 may operate for combustion at the beginning of ignition.

The mounting groove 31 is formed corresponding to a plurality of battery cells 10 so that the fire extinguishing patch 40 is responsible for the fire of the plurality of battery cells 10. In the first embodiment, one fire extinguishing patch 40 is provided in one mounting groove 31, and one fire extinguishing patch 40 is provided corresponding to seven cylindrical rechargeable batteries (see FIG. 1).

A side surface 42 of the fire extinguishing patch 40 and a corresponding inner side surface 311 of the mounting groove 31 form the gap G therebetween. The fire extinguishing patch 40 has the thickness (t) smaller than the depth D of the mounting groove 31, and has the height difference (h) from an inner surface 302 of the top case 30 when attached to the mounting groove 31.

The mounting groove 31 forms a ceiling 312 as a plane and connects the inner side surface 311 to the ceiling 312 at a right angle, thereby forming the inner side surface 311 and the ceiling 312. The mounting groove 31 is open toward the battery cells 10 on the inner side surface 311.

The flame induction part 33 is formed on the inner side surface 311 of the mounting groove 31, which is connected at a right angle to the inner surface 302 of the top case 30. The flame induction part 33 directly induces the flame to the side surface 42 of the fire extinguishing patch 40 through the gap G between the side surface 42 of the fire extinguishing patch 40 and the corresponding inner side surface 311 of the mounting groove 31. Additionally, the flame generated by the battery cell 10 may reach the lower surface of the fire extinguishing patch 40.

At this time, the distance D20 between the fire extinguishing patch 40 and the battery cell 10 may be set to 3 to 6 times the thickness (t) of the fire extinguishing patch 40 (D20=3~6*t). For example, the thickness (t) of the fire extinguishing patch 40 is 2.0 to 3.0 mm, and the distance D20 is 5.0 to 6.0 mm.

If the distance D20 is less than 5.0 mm, the time it takes for the flame generated by the battery cells 10 to reach the fire extinguishing patch 40 is short, allowing the fire extinguishing agent to burn quickly. However, the large amount of smoke acting as a fire extinguishing agent makes it difficult to quickly extinguish the flame of the battery cells 10 which are relatively far from the fire extinguishing patch 40.

If the distance D20 exceeds 6.0 mm, the time it takes for the flame generated by the battery cells 10 to reach the fire extinguishing patch 40 is delayed, causing the beginning of combustion of the fire extinguishing agent to be delayed, and as a result, the time required for sufficient smoke acting as a fire extinguish agent to be generated and extinguish the flame of the battery cells 10 is delayed.

For example, if the distance D30 between the battery cell 10 and the inner surface 302 of the top case 30 is 7.0 mm, the thickness (t) of the fire extinguishing patch 40 is 2 mm, the depth D of the mounting groove 31 is 1 mm, and the thickness (t2) of the double-sided tape 41 is 0.3 mm, the distance D20 between the fire extinguishing patch 40 and the battery cell 10 is 5.7 mm according to the equation (D3 + D - t - t2 = 7.0 1 - 2 - 0.3 = 5.7 mm).

In this case, the flame generated by the battery cells 10 reaches the fire extinguishing patch 40 at an appropriate time so that the fire extinguishing agent is combusted within an appropriate time, and a large amount of smoke acting as a fire extinguishing agent may also extinguish the flame in the battery cells 10 which are located relatively far from the fire extinguishing patch 40.

Hereinafter, various embodiments of the present disclosure will be described. Description of the same parts may be omitted while description of different parts will be provided.

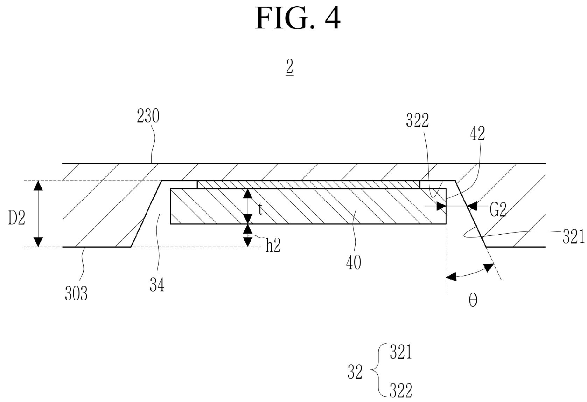

FIG. 4 is a cross-sectional view showing the relationship between the mounting groove and the fire extinguishing patch in the battery pack fire extinguisher according to the second embodiment of the present disclosure. Referring to FIG. 4, in a battery pack fire extinguisher 2 according to the second embodiment, the side surface 42 of the fire extinguishing patch 40 and the corresponding inner side surface 321 of the mounting groove 32 form the gap G2 therebetween.

The gap G2 is maximally formed on the battery cell 10 side (lower side in FIG. 4) and minimally toward a ceiling 322 of the mounting groove 32. The fire extinguishing patch 40 has the thickness (t) smaller than the depth D2 of the mounting groove 32, and has the height difference h2 from a inner surface 303 of a top case 230 while attached to the mounting groove 32.

The mounting groove 32 may be formed by forming the ceiling 322 into a plane and connecting the inner side surface 321 to the ceiling 322 at the inclination angle θ. The mounting groove 32 is open toward the battery cells 10 on the inner side surface 321.

The flame induction part 33 is formed on the inner side surface 321 of the mounting groove 32, which is connected to the inner surface 303 of the top case 230 at the inclination angle θ. The flame induction part 34 directly induces the flame to the side surface 42 of the fire extinguishing patch 40 through the gap G2 between the side surface 42 of the fire extinguishing patch 40 and the corresponding inner side surface 321 of the mounting groove 32. Additionally, the flame generated by the battery cell 10 may reach the lower surface of the fire extinguishing patch 40.

The flame induction part 34, due to the inclination angle θ, has a larger opening area toward the battery cells 10 on the inner surface 303 of the case 230 than the opening area of the flame induction part 33 of the first embodiment toward the battery cells 10 on the inner surface 302 of the case 30.

In this case, the flame generated by the battery cells 10 reaches the fire extinguishing patch 40 more effectively than the flame induction part 33 according to the first embodiment by the flame induction part 34, and the large amount of smoke acting as a fire extinguishing agent may more effectively extinguish the flames in the battery cells 10 which are relatively far from the fire extinguishing patch 40.

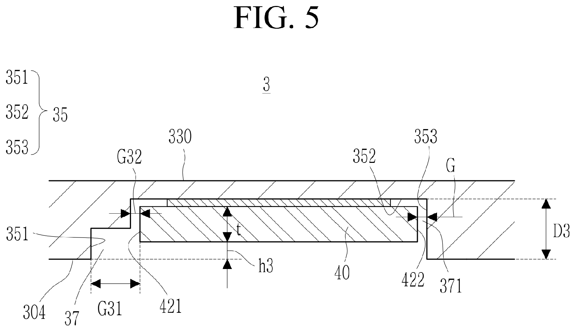

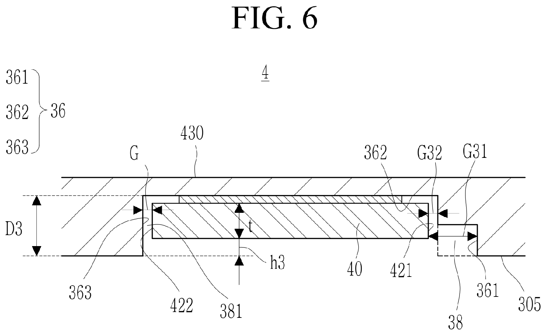

FIG. 5 is a cross-sectional view showing the relationship between the mounting groove and the fire extinguishing patch in the battery pack fire extinguisher according to the third embodiment of the present disclosure, and FIG. 6 is a cross-sectional view showing the relationship between the mounting groove and the fire extinguishing patch in the battery pack fire extinguisher according to the fourth embodiment of the present disclosure.

Referring to FIGS. 5 and 6, a battery pack fire extinguisher 3 of the third embodiment and a battery pack extinguisher 4 of the fourth embodiment have a left-right symmetrical structure when viewed in the drawings. Therefore, the second and third embodiments will be described together.

In the battery pack fire extinguishers 3 and 4 of the third and fourth embodiments, a first side surface 421 of the fire extinguishing patch 40 and corresponding first inner side surfaces 351 and 361 of mounting grooves 35 and 36 form the first gap G31 and the second gap G32 therebetween via a stepped structure of the first inner side surfaces 351 and 361. The first gap G31 is maximally formed on the side of the battery cell 10, and the second gap G32 is minimally formed on the sides of the ceilings 352 and 362 of the mounting grooves 35 and 36.

A second side surface 422 of the fire extinguishing patch 40 and the corresponding second inner side surfaces 353 and 363 of the mounting grooves 35 and 36 form the gap G therebetween. The mounting grooves 35 and 36 are asymmetrical left and right. That is, the first inner side surfaces 351 and 361 are formed in a stepped structure in the mounting grooves 35 and 36, and the second inner side surfaces 353 and 363 are formed in a straight structure.

The fire extinguishing patch 40 has the thickness (t) smaller than the depth D3 of the mounting grooves 35 and 36, and has the height difference h3 with inner surfaces 304 and 305 of top cases 330 and 430 while attached to the mounting grooves 35 and 36.

The mounting grooves 35 and 36 are formed by forming the ceilings 352 and 362 into a plane, connecting the first inner side surfaces 351 and 361 to the ceilings 352 and 362 in a stepped structure, and connecting the second side surface 353 and 363 to the ceilings 352 and 362 at a right angle. The mounting grooves 35 and 36 are open toward the battery cells 10 via the first inner side surfaces 351 and 361, and the second side surface 353 and 363.

Flame induction parts 37 and 38 are formed on the first inner surfaces 351 and 361 of the mounting grooves 35 and 36, which are connected at a stepped structure of the first inner surfaces 351 and 361 to the inner surfaces 304 and 305 of the top cases 330 and 430. The flame induction parts 37 and 38 induce the flame to the first side surface 421 of the fire extinguishing patch 40 through the first gap G31 and the second gap G32 between the first side surface 421 of the fire extinguishing patch 40 and the corresponding first inner side surfaces 351 and 361 of the mounting grooves 35 and 36.

Flame induction parts 371 and 381 are formed on the second inner side surfaces 353 and 363 of the mounting grooves 35 and 36, which are connected via a straight structure of the second inner side surfaces 353 and 363 to the inner surfaces 304 and 305 of the top cases 330 and 430. The flame induction parts 371 and 381 induce flame to the second side surface 422 of the fire extinguishing patch 40 through the first gap G between the second side surface 422 of the fire extinguishing patch 40 and the corresponding second inner side surfaces 353 and 363 of the mounting grooves 35 and 36.

Additionally, the flame generated by the battery cell 10 may reach the lower surface of the fire extinguishing patch 40.

The flame induction parts 37 and 38 have an area opened toward the battery cells 10 from the inner surfaces 304 and 305 of the top cases 330 and 430 due to a stepped structure of the first inner side surfaces 351 and 361 larger than the area opened toward the battery cells 10 from the inner surface 302 of the top case 30 of the flame induction part 33 according to the first embodiment.

Since the flame induction parts 37 and 38 according to the third and fourth embodiments are provided with a stepped structure of the first inner side surfaces 351 and 361 tilted to the left or right with respect to the fire extinguishing patch 40, the flame induction parts 37 and 38 may be selectively used when it is necessary to more effectively induce the flame from the left or right and more effectively send out fire extinguishing smoke.

As shown in FIG. 1, if the fire extinguishing patch 40 has a disk shape, in the third and fourth embodiments, the first inner side surfaces 351 and 361 may be formed over half of the entire circumference or in a required range. It is possible to induce the flame from the battery cell 10 over a region of the first inner side surfaces 351 and 361, and send the fire extinguishing smoke to the ignited battery cell 10.

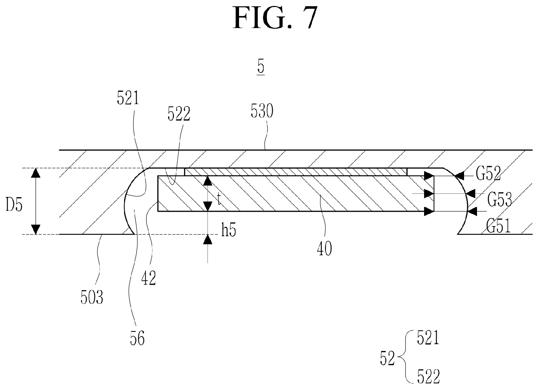

FIG. 7 is a cross-sectional view showing the relationship between the mounting groove and the fire extinguishing patch in the battery pack fire extinguisher according to the fifth embodiment of the present disclosure. Referring to FIG. 7, in a battery pack fire extinguisher 5 of the fifth embodiment, the side surface 42 of the fire extinguishing patch 40 and the corresponding inner side surface 521 of the mounting groove 52 form the first gap G51 and the second gap G52 by the two ends of the round structure of the inner side surface 521 therebetween and the third gap G53 between the two ends.

The first gap G51 is maximally formed on the side of the battery cell 10, the second gap G52 is minimally formed on the side of a ceiling 522 of the mounting groove 52, and the third gap G53 gradually widens toward the middle between the side of the battery cell 10 and the mounting groove 52.

The fire extinguishing patch 40 has the thickness (t) smaller than the depth D5 of the mounting groove 52, and has the height difference h5 with an inner surface 503 of the top case 530 when attached to the mounting groove 52.

The flame induction part 56 is formed on the inner side surface 521 of the mounting groove 52, which is connected via a round structure of the inner side surface 521 to the inner surface 503 of the top case 530. The flame induction part 56 induces the flame to the first side surface 42 of the fire extinguishing patch 40 through the first gap G51, the second gap G52, and the third gap G53 between the first side surface 42 of the fire extinguishing patch 40 and the corresponding inner side surface 521 of the mounting groove 52. Additionally, the flame generated by the battery cell 10 may reach the lower surface of the fire extinguishing patch 40.

The flame induction part 56 may have an area opened toward the battery cells 10 from the inner surface 503 of the case 530 larger than the area opened toward the battery cells 10 from the inner surface 302 of the case 30 of the flame induction part 33 according to the first embodiment due to a round structure, and may further induce the flame into the round structure.

In this case, more flames generated by the battery cells 10 reach the fire extinguishing patch 40 than the flame induction part 33 of the first embodiment due to the flame induction part 56 and a large amount of smoke, acting as a fire extinguishing agent, may also extinguish more flames of the battery cells 10 located relatively far from the fire extinguishing patch 40.

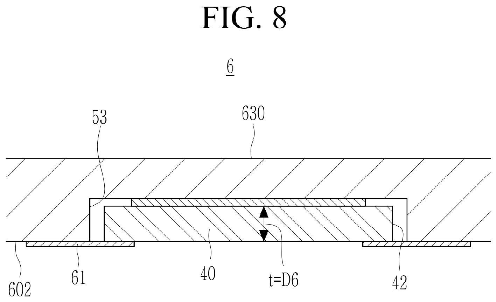

FIG. 8 is a cross-sectional view showing the relationship between the mounting groove and the fire extinguishing patch in the battery pack fire extinguisher according to the sixth embodiment of the present disclosure. Referring to FIG. 8, in a battery pack fire extinguisher 6 of the sixth embodiment, the fire extinguishing patch 40 is disposed in the mounting groove 53, and the fire extinguishing patch 40 and an inner surface 602 of the top case 630 are attached with a patch tape 61.

The fire extinguishing patch 40 may have the same thickness (t) as the depth D6 of the mounting groove 53, and the patch tape 61 may be attached to the fire extinguishing patch 40 and the inner surface 602 of the top case 630 in a plane state.

In this case, the temperature required to ignite the fire extinguishing agent embedded in the fire extinguishing patch 40 is 380 to 400°C. The patch tape 61 may be formed of a PET film with excellent thermal conductivity. Therefore, the temperature of the patch tape 61 is increased by the flame generated by the ignition of the battery cell 10, and quickly raises the temperature of the fire extinguishing agent to the ignition temperature.

While this disclosure has been described in connection with what is presently considered to be practical embodiments, it is to be understood that the disclosure is not limited to the disclosed embodiments, but on the contrary, is intended to cover various modifications and equivalent arrangements included within the spirit and scope of the appended claims.

**<Description of symbols>**

| | | | |
|---|---|---|---|
| 1, 2: | Battery pack fire extinguisher | 3, 4: | Battery pack extinguisher |
| 5, 6: | Battery pack fire extinguisher | 10: | Battery cell |
| 20: | Bottom case | 30: | Top case |
| 31, 32: | Mounting groove | 33, 34: | Flame induction part |
| 35, 36: | Mounting groove | 37, 38: | Flame induction part |
| 40: | Fire extinguishing patch | 41: | Double-sided tape |
| 52, 53: | Mounting groove | 56: | Flame induction part |
| 61: | Patch tape | 302, 303: | Inner surface |
| 304, 305: | Inner surface | 311, 321, 521: | Inner side surface |
| 312, 322: | Ceiling | 351, 361: | First inner side surface |
| 330, 430: | Top case | 352, 362: | Ceiling |
| 353, 363: | Second inner side surface | 371, 381: | Flame induction part |
| 421, 422: | First and second side surfaces | 503: | Inner surface |
| 522: | Ceiling | 530: | Top case |
| 602: | Inner surface | 630: | Top case |
| D, D2, D3: | Depth | D5: | Depth |
| D20, D30: | Distance | G, G2: | Gap |
| G31: | First gap | G32: | Second gap |
| G51: | First gap | G52: | Second gap |
| G53: | Third gap | h: | Height |
| h2, h3, h5: | Height difference | t: | Thickness |
| UP: | Unit pack | θ: | Incline angle |

## Claims

1. A battery pack fire extinguisher, comprising:
a plurality of battery cells;
a bottom case incorporating the battery cells;
a top case coupled to the bottom case, having a mounting groove, and having a flame induction part at an outer side of the mounting groove; and
a fire extinguishing patch attached to the mounting groove and incorporating a fire extinguishing agent.

2. The battery pack fire extinguisher as claimed in claim 1, wherein
the battery cells are formed into cylindrical rechargeable batteries.

3. The battery pack fire extinguisher as claimed in claim 1, wherein
the fire extinguishing patch is attached to the mounting groove with a double-sided tape.

4. The battery pack fire extinguisher as claimed in claim 3, wherein
the double-sided tape is formed of PET film to quickly reach a temperature that ignites the fire extinguishing agent.

5. The battery pack fire extinguisher as claimed in claim 1, wherein
the mounting groove is formed to correspond to the plurality of battery cells so that the fire extinguishing patch is responsible for fires of the plurality of battery cells.

6. The battery pack fire extinguisher as claimed in claim 1, wherein
the side surface of the fire extinguishing patch and the corresponding inner surface of the mounting groove form a gap therebetween.

7. The battery pack fire extinguisher as claimed in claim 6, wherein
the fire extinguishing patch has a thickness smaller than the depth of the mounting groove and has a height difference from the inner surface of the top case while attached to the mounting groove.

8. The battery pack fire extinguisher as claimed in claim 1, wherein
the mounting groove is formed by forming a ceiling into a plane and connecting the inner surface to the ceiling at a right angle.

9. The battery pack fire extinguisher as claimed in claim 8, wherein
the flame induction part is formed on the inner side surface of the mounting groove, which is connected to the inner surface of the top case at a right angle, and
the flame induction part induces flame to the side surface of the fire extinguishing patch through a gap between the side surface of the fire extinguishing patch and the corresponding inner side surface of the mounting groove.

10. The battery pack fire extinguisher as claimed in claim 1, wherein
the side surface of the fire extinguishing patch and the corresponding inner surface of the mounting groove form a gap therebetween, and
the gap is maximally formed on the side of the battery cell and minimally formed toward the ceiling of the mounting groove.

11. The battery pack fire extinguisher as claimed in claim 10, wherein
the fire extinguishing patch has a thickness smaller than the depth of the mounting groove and has a height difference from the inner surface of the top case when attached to the mounting groove.

12. The battery pack fire extinguisher as claimed in claim 1, wherein
the mounting groove is formed by forming a ceiling into a plane and connecting the inner surface to the ceiling at an inclination angle.

13. The battery pack fire extinguisher as claimed in claim 12, wherein
the flame induction part is formed on the inner side surface of the mounting groove, which is connected to the inner surface of the top case at an inclination angle, and
the flame induction part induces flame to the side surface of the fire extinguishing patch through a gap between the side surface of the fire extinguishing patch and the corresponding inner side surface of the mounting groove.

14. The battery pack fire extinguisher as claimed in claim 1, wherein
a first side surface of the fire extinguishing patch and a corresponding first inner side surface of the mounting groove form a first gap and a second gap by a stepped structure of the first inner surface therebetween,
the first gap is maximally formed on the side of the battery cell,
the second gap is minimally formed on the side of the ceiling of the mounting groove, and
a second side surface of the fire extinguishing patch and a corresponding second inner side surface of the mounting groove form a gap therebetween.

15. The battery pack fire extinguisher as claimed in claim 14, wherein
the fire extinguishing patch has a thickness smaller than the depth of the mounting groove, and has a height difference from the inner surface of the top case when attached to the mounting groove, and
the flame induction part is formed on the first inner surface of the mounting groove, which is connected via a stepped structure of the first inner surface on the inner surface of the top case, and
the flame induction part induces flame to the first side surface of the fire extinguishing patch through the first gap and the second gap between the first side surface of the fire extinguishing patch and the corresponding first inner side surface of the mounting groove.

16. The battery pack fire extinguisher as claimed in claim 1, wherein
the side surface of the fire extinguishing patch and the corresponding inner surface of the mounting groove form the first gap and the second gap by two ends of a round structure on the inner side surface therebetween,
the first gap is maximally formed on the side of the battery cell, and
the second gap is minimally formed on the side of the ceiling of the mounting groove.

17. The battery pack fire extinguisher as claimed in claim 16, wherein
the fire extinguishing patch has a thickness smaller than the depth of the mounting groove and has a height difference from the inner surface of the top case when attached to the mounting groove,
the flame induction part is formed on the inner side surface of the mounting groove, which is connected via a round structure to the inner surface of the top case, and
the flame induction part induces flame to the side surface of the fire extinguishing patch through the first gap and the second gap between the side surface of the fire extinguishing patch and the corresponding inner side surface of the mounting groove.

18. The battery pack fire extinguisher as claimed in claim 1, wherein
the fire extinguishing patch is disposed in the mounting groove, and
the fire extinguishing patch and the inner surface of the top case are attached with a patch tape.

19. The battery pack fire extinguisher as claimed in claim 18, wherein
the fire extinguishing patch has the same thickness as the depth of the mounting groove, and
the patch tape is attached to the fire extinguishing patch and the inner surface of the top case in a plane state.

20. The battery pack fire extinguisher as claimed in claim 1, wherein
the distance between the fire extinguishing patch and the battery cell is set to 3 to 6 times the thickness of the fire extinguishing patch.
